# EUROPEAN PATENT APPLICATION

(11) **EP 4 144 629 A1**
(43) Date of publication of application: **08.03.2023**
(21) Application number: 21796566.4
(22) Date of filing: 22.02.2021
(51) Int. Cl.: B63B 25/16, F17C 3/02, B32B 15/14, B32B 7/12

(54) **SECONDARY BARRIER FOR LIQUEFIED GAS STORAGE TANK**

(30) Priority: 27.04.2020 KR 20200051087; 21.10.2020 KR 20200136721; 23.10.2020 KR 20200138632
(71) Applicant: Korea Shipbuilding & Offshore Engineering Co., Ltd., Jongno-gu Seoul 03058 (KR); Hyundai Heavy Industries Co., Ltd., Ulsan 44032 (KR)
(72) Inventor: KIM, Kwang Hyun, Seoul 03058 (KR); JUHN, Kyu Jin, Seoul 03058 (KR); SO, Yong Shin, Seoul 03058 (KR); LEE, Dong Ju, Seoul 03058 (KR); SONG, Eun Ha, Seoul 03058 (KR); SEO, Jeong Gyeong, Seoul 03058 (KR); LEE, Jeong Min, Seoul 03058 (KR)
(74) Representative: Betten & Resch
(86) International application number: PCT/KR2021/002211
(87) International publication number: WO 2021/221282

(57) **Abstract**

The present disclosure relates to a secondary barrier for a liquefied gas storage tank, which is a secondary barrier for a liquefied gas storage tank characterized by including a barrier layer including (a) a metal or (b) one or more polymers selected from a group consisting of polyethylene, polyethylene terephthalate, polyvinyl alcohol, ethylene vinyl alcohol and nylon, and a glass cloth laminated on both sides of the barrier layer, which includes one or more fibers selected from a group consisting of glass fibers, polyethylene fibers, polyparaphenylenebenzobisoxazole fibers (PBO), aramid fibers and carbon fibers, wherein the glass cloth is fixed by an adhesive layer suitable for the surface characteristics.

## Description

### Technical Field

The present disclosure relates to a secondary barrier for a liquefied gas storage tank.

### Background Art

In general, hydrocarbons such as natural gas and ethylene are liquefied at a low temperature after production and stored and transported in the form of liquefied gas. For example, natural gas can be cooled to - 163°C and treated in the form of liquefied gas. Accordingly, in floating offshore structures or ships that produce or transport liquefied gas, a structure of a storage tank for stably storing liquefied gas at a low temperature is required.

An insulating wall for insulation and a barrier structure for liquid-tightness of the stored liquefied gas are provided on the inner wall surface of the liquefied gas storage tank, and a secondary barrier structure has been utilized. A secondary insulating wall and a secondary barrier may be laminated on the inner wall surface of the liquefied gas storage tank, and a primary insulating wall and a primary barrier may be laminated on the secondary barrier, and the primary barrier may be in contact with the liquefied gas. The secondary barrier may provide an airtight structure to prevent the leakage of liquefied gas, and even if the primary barrier is damaged, it may be provided to withstand approximately two weeks until the ship moves to the port and unloads the liquefied gas.

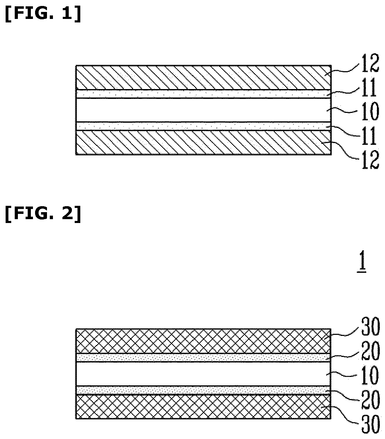

Referring to FIG. 1, as a conventional secondary barrier, a structure in which an adhesive layer 11 is formed on both sides of a metal barrier layer 10 such as aluminum foil or a stainless sheet, and a glass cloth 12 including glass fibers is laminated on the adhesive layer 11 is employed. As the adhesive layer 11 used to laminate the metal barrier layer 10 and the glass cloth 12, a polyurethane-based adhesive was used.

Polyurethane-based or epoxy-based adhesives used in the construction of secondary barriers form hard and sharp edges after adhesive curing. The glass cloth 11 is subjected to cooling and heat directly or indirectly, thereby causing secondary barrier tear damage as it contracts and expands repeatedly. Breakage of the glass cloth 11 means breakage of the secondary barrier, and damage to the secondary barrier leads to leakage of liquefied gas and huge repair costs. Accordingly, while attempts have been made to improve the durability of the secondary barrier by changing the material of the glass cloth of the secondary barrier, there has been a problem in conventional adhesives that a glass cloth including a fiber material having a surface characteristic different from that of glass fiber cannot be adhered to the surface of the metal barrier layer.

In addition, the barrier layer 10 is a thin metal layer of tens to hundreds of micrometers, and has a disadvantage in that it is vulnerable to damage due to tearing due to low tear strength. The metal barrier layer 10 is easily corroded by moisture, so there was a disadvantage in that when handling cryogenic liquefied gas, damage is caused by moisture in the surrounding air that condenses, or that the strength of the entire secondary barrier is lowered due to exposure to seawater when damage to the outer wall of the hull occurred.

### Disclosure of the Invention

### Technical Goals

Accordingly, the present disclosure has been proposed to solve the problems of the related art as described above, and an object of the present disclosure is to provide a secondary barrier that exhibits excellent tensile strength, shear strength and durability even in a cryogenic environment using a barrier layer including a polymer that does not cause corrosion or a glass cloth, and a method for manufacturing the same.

### Technical Solutions

A secondary barrier according to an aspect of the present disclosure is for a liquefied gas storage tank, and includes a barrier layer comprising (a) a metal or (b) one or more polymers selected from a group consisting of polyethylene, polyethylene terephthalate, polyvinyl alcohol, ethylene vinyl alcohol and nylon, and a glass cloth laminated on both sides of the barrier layer, wherein the glass cloth may be fixed by an adhesive layer.

Specifically, the barrier layer may include a metal, and the glass cloth may include polyethylene fibers.

Specifically, a thickness of the barrier layer may be 50 to 200 µm.

Specifically, the polyethylene fibers may be 200 to 1600 denier.

Specifically, the barrier layer may include one or more polymers selected from a group consisting of polyethylene, polyethylene terephthalate, polyvinyl alcohol, ethylene vinyl alcohol and nylon.

Specifically, the polymer may have a density of 0.9 to 1.7 g/cm³.

Specifically, the barrier layer may be at least partly deposited with one or more metals or metal oxides selected from aluminum, copper, and oxides thereof.

Specifically, the glass cloth may include one or more fibers selected from a group consisting of glass fibers, polyethylene fibers, polyparaphenylenebenzobisoxazole fibers, aramid fibers and carbon fibers.

Specifically, the adhesive layer may include at least one of linear low-density polyethylene and ethylene vinyl acetate.

Specifically, the adhesive layer may have a melting point lower than a melting point of the glass cloth, and the melting point of the adhesive layer may be 90 to 120°C.

Another aspect of the present disclosure is a liquefied gas storage tank including a secondary barrier according to an aspect of the present disclosure, characterized in that the secondary insulating wall fixed to the hull, the secondary barrier, the primary insulating wall and the primary barrier are arranged sequentially.

Specifically, the second barrier may be disposed by being bonded to the secondary insulating wall, and the first barrier may be disposed by being welded on the primary insulating wall.

### Advantageous Effects

The present disclosure uses a polyethylene glass cloth having superior tensile strength compared to conventional glass fibers to provide a secondary barrier having excellent durability even in a cryogenic environment, and at the same time to achieve weight reduction due to low specific gravity, thereby improving workability and operating fuel efficiency.

In addition, the present disclosure may solve the problem of difficult adhesion to the metal surface without damage to the polyethylene glass cloth by bonding the polyethylene glass cloth to the metal barrier layer using a polyethylene-based adhesive layer having a relatively low melting point compared to the melting point of the polyethylene glass cloth.

In addition, the present disclosure provides a secondary barrier with improved durability based on excellent tear strength even in a cryogenic environment using a polymer barrier layer having superior corrosion resistance and tear strength compared to conventional metal or alloy materials, and at the same time, by achieving weight reduction due to a low specific gravity, workability and operating fuel efficiency can be improved.

### Brief Description of Drawings

FIG. 1 is a cross-sectional view of a secondary barrier including a conventional glass cloth.
FIG. 2 is a cross-sectional view of a secondary barrier according to the present disclosure.
FIG. 3 is a conceptual diagram illustrating a method for manufacturing a secondary barrier according to the present disclosure.
FIG. 4 is a conceptual diagram illustrating a method of manufacturing a secondary barrier according to the present disclosure.

### Best Mode for Carrying Out the Invention

The objects, specific advantages and novel features of the present disclosure will become more apparent from the following detailed description and preferred embodiments taken in conjunction with the accompanying drawings. In the present specification, in adding reference numerals to the components of each drawing, it should be noted that only the same components are given the same numeral as possible even though they are indicated on different drawings. In addition, in describing the present disclosure, if it is determined that a detailed description of a related known art may unnecessarily obscure the subject matter of the present invention, the detailed description thereof will be omitted.

Hereinafter, the liquefied gas may be LNG, ethane, hydrogen, etc. having a low boiling point.

Hereinafter, it should be noted that high pressure, low pressure, high temperature, low temperature, high strength, and low strength are relative and do not represent absolute values.

Hereinafter, it is noted that the liquefied gas carrier is an expression encompassing all ships carrying cargo, merchant ships, and ships capable of producing natural gas in the ocean.

Hereinafter, a secondary barrier is to be disposed on the secondary insulating wall fixed to the hull, and may encompass a rigid secondary barrier (RSB) provided to cover the secondary insulating wall and a flexible secondary barrier (FSB) provided to cover two or more RSBs.

Hereinafter, a metal material may refer to a single metal or an alloy including two or more metals.

Hereinafter, preferred embodiments of the present disclosure will be described in detail with reference to the accompanying drawings.

FIG. 1 is a cross-sectional view of a conventional secondary barrier.

Referring to FIG. 1, the secondary barrier has a structure in which the adhesive layer 11 and the glass cloth 12 are sequentially stacked on both sides of the barrier layer 10 centered on the barrier layer 10 made of a metal material.

The barrier layer 10 may be an aluminum foil or a stainless sheet, but is not limited thereto, and one suitable for a cryogenic environment, such as austenitic stainless steels and copper alloys whose crystals mainly have a face-centered cubic structure may be used. However, the barrier layer 10 made of such a metal has limitations in that it has low tear strength and is vulnerable to corrosion.

The adhesive layer 11 is a polyurethane-based adhesive, and may be a thermoplastic polyurethane adhesive (TPU) that is melted by heat to adhere the barrier layer 10 and the glass cloth 12 and then cured.

The glass cloth 12 may be a fabric layer having improved strength by impregnating glass fibers with resin and hardening them. When liquefied gas leaks and comes into contact with the secondary barrier, the thermal shrinkage stress is concentrated in the adhesive layer 11, and as the shrinkage stress and the peeling stress of the adhesive layer 11 are transmitted to the adhesive layer 11 and the bonded glass cloth 12, there is a limitation in showing a low durability.

FIG. 2 is a cross-sectional view of a secondary barrier 1 according to the present disclosure.

The secondary barrier 1 according to the present disclosure include a barrier layer 10 including (a) a metal or (b) one or more polymers selected from a group consisting of polyethylene, polyethylene terephthalate, polyvinyl alcohol, ethylene vinyl alcohol and nylon, and a glass cloth 30 laminated on both sides of the barrier layer 10, wherein the glass cloth 30 may be fixed to the barrier layer 10 by an adhesive layer 20.

Referring to FIG. 2, Example 1 relating to a secondary barrier including a metal barrier layer and a glass cloth including polyethylene fibers and Example 2 relating to a secondary barrier including a barrier layer including a polymer will be described.

### Example 1. Secondary barrier including glass cloth of polyethylene

The secondary barrier 1 according to the present example may include the barrier layer 10, and may be formed by laminating the adhesive layer 20 and the glass cloth 30 on both sides of the barrier layer 10.

The barrier layer 10 is made of a metal material like the conventional secondary barrier described above, and may serve to prevent the leakage of liquefied gas through the liquid-tight and airtightness of the secondary barrier 1. The barrier layer 10 may include an aluminum foil, a copper foil, a stainless sheet such as SUS304, a copper alloy such as beryllium copper, and the like.

The thickness of the barrier layer 10 may be 50 to 200 µm. If the thickness of the barrier layer 10 is less than 50 µm, the strength of the barrier layer 10 responsible for the liquid-tightness of the secondary barrier 1 is significantly lowered, resulting in a problem of reduced durability, and if it is larger than 200 µm, it becomes difficult to wind up in the manufacturing and construction process of the secondary barrier 1, resulting in a problem of deterioration of workability.

Additionally, an epoxy-based primer may be applied to the surface of the barrier layer 10 to improve the adhesive strength between the adhesive layer 20 and the barrier layer 10, which will be described later.

The glass cloth 30 is disposed and laminated on the adhesive layer 20 formed on both surfaces of the barrier layer 10, and may include polymer fibers. As the glass cloth 30 forms both surfaces of the secondary barrier 1, the strength of the glass cloth 30 may directly affect the durability of the secondary barrier 1.

Specifically, the glass cloth 30 may be a fabric layer including polyethylene fibers as polymer fibers. Preferably, the polyethylene fiber may be an ultra-high molecular weight polyethylene fiber (UHMWPE fiber). UHMWPE fibers have a molecular weight of 3.5 million to 7.5 million, and have been used in fields requiring excellent cut resistance due to high tear strength. Paying attention to the fact that these UHMWPE fibers have excellent ultimate tensile strength and tear strength, and light weight, by weaving the fabric layer with the fibers and using it as the glass cloth 30 for the secondary barrier 1, the effect of increasing the durability of the secondary barrier 1 can be secured.

Table 1 below compares the physical properties of the UHMWPE fiber for use in the glass cloth 30 of the present example and the glass fiber mainly used in the conventional glass cloth.

**TABLE 1**

| Type | Modulus of elasticity (GPa) | Ultimate tensile strength (GPa) | Density (g/cm³) | Coefficient of thermal expansion (X10⁻⁶/°C) |
|---|---|---|---|---|
| Glass fiber | 73 ∼ 79 | 1.8 ∼ 2.7 | 2.66 | 5.4 |
| Ultra-high molecular weight polyethylene fiber | 100 ∼ 190 | 3.3 ∼ 3.8 | 0.93 | 200 |

As shown in Table 1, in the present example, by using a material having a higher modulus of elasticity and ultimate tensile strength and a significantly lower density than glass fiber as the material of the glass cloth 30, it is possible to secure better ultimate tensile strength of the secondary barrier 1 and improve workability due to its light weight as will be described later.

In addition, as the polyethylene fibers included in the glass cloth 30 according to the present example, those having an average thickness of 200 to 1600 denier (D) may be used. Denier is a unit of linear mass when 1 g of polyethylene fiber is stretched to 9,000 m. When the thickness of the polyethylene fiber was less than 200 denier, a phenomenon occurred that the ultimate tensile strength at a cryogenic temperature (-170°C) was rapidly lowered, and when it is greater than 1600 denier, it is difficult to wind up in the manufacturing and construction process of the secondary barrier 1, and thus there is an issue in that workability is lowered. Preferably, polyethylene fibers having an average thickness of 200 to 800 denier may be used. The ultimate tensile strength for each thickness of the polyethylene fiber will be described later.

Meanwhile, since the polyethylene glass cloth 30 has a relatively low surface energy compared to a conventional glass cloth including glass fibers, it is difficult to adhere to the metal surface constituting the barrier layer 10. Since it has a relatively low surface energy compared to a glass cloth including glass fibers, it is difficult to adhere to the metal surface constituting the barrier layer 10. Accordingly, in the present example, the adhesion of the polyethylene glass cloth 30 and the barrier layer 10 was implemented using the adhesive layer 20 as described later.

The adhesive layer 20 is disposed on both sides of the barrier layer 10 to bond the above-described glass cloth 30 and the barrier layer 10. The adhesive layer 20 may be disposed in such a way that an adhesive composition is applied on both sides of the barrier layer 10 or a separate layer such as an adhesive film or sheet is laminated.

Polyethylene fibers constituting the glass cloth 30 have a melting point (140°C) significantly lower than the melting point (165°C) of the conventional polyurethane-based adhesive film, so that adhesion to the barrier layer 10 cannot be made, and have a non-adhesive property due to a non-polar surface characteristic. Accordingly, in the present example, it is possible to solve the problem of difficult adhesion of the glass cloth 30 by using a polyethylene-based compound, which is a polymer of the same type, as the adhesive layer 20.

Specifically, the adhesive layer 20 may be formed of an adhesive composition including a polyethylene-based compound, an adhesive film, or an adhesive sheet. As the polyethylene-based compound, a thermoplastic having a polyethylene chain as a backbone may be used.

Preferably, the polyethylene-based compound is one in which one or more functional groups are bonded to a main chain polymer including polyethylene as a side chain, and the compound may be at least partially modified by bonding a polar functional group. That at least a part of the compound is modified may mean that a functional group is crosslinked with respect to the compound in a manner such as graft polymerization to form a branch.

For example, the adhesive layer 20 may be one in which one or more functional groups having polarity are polymerized on the polyolefin, or the entire polyolefin has polarity as one or more functional groups are polymerized.

For example, the adhesive layer 20 may be formed using an adhesive film including at least one of linear low density polyethylene (LLDPE) and ethylene vinyl acetate (EVA).

Additionally, the adhesive layer 20 may include a polymer having a melting point of 90 to 120°C. The glass cloth 30 comprising polyethylene fibers has a melting point of approximately 140 °C, and by using a polymer of the same type as the glass cloth 30 as a backbone, the adhesion to the glass cloth 30 is improved, and by forming the adhesive layer 20 with a polymer having a melting point lower than that of the glass cloth 30, the secondary barrier 1 can be manufactured even under a relatively low temperature condition. Accordingly, by disposing the adhesive layer 20 of the present example between the glass cloth 30 and the barrier layer 10 and applying heat, only the adhesive layer 20 can be melted, and it is possible to adhere the glass cloth 30 and the barrier layer 10 without damage to the polyethylene fiber and the glass cloth 30 including the same.

According to the present example, using an aluminum foil with a thickness of 70 µm as the metal layer 10, after pressing and laminating an adhesive film including LLDPE having a melting point of approximately 115°C and a glass cloth 30 including polyethylene fibers on both sides, whether the adhesive layer 20 was formed according to various temperatures through the heating furnace and the adhesive strength to the adjacent layers were checked, and the results are shown in Table 2 below.

**TABLE 2**

| Heating temperature (°C) | Adhesive strength (MPa) |
|---|---|
| 110 | No adhesive layer is formed |
| 115 | 7.2 |
| 120 | 8.9 |
| 130 | 13.3 |
| 140 | 12.1 |
| 145 | Damage of glass cloth |

As shown in Table 2, the adhesive layer 20 itself is not formed at a temperature lower than the melting point (115°C) of the adhesive film, the adhesive film melted and then hardened from a temperature corresponding to the melting point to form the adhesive layer 20, but exhibited the greatest adhesive strength at 130°C and decreased thereafter. It can be seen that the adhesive strength of the formed adhesive layer 20 is not necessarily proportional to the heating temperature. In the case of forming the adhesive layer 20 according to the present example, it was confirmed that the adhesive layer 20 exhibited an adhesive strength of up to 5 MPa at room temperature and up to 25 MPa at cryogenic temperature (-170°C).

The thickness of the adhesive layer 20 may be 0.05 to 0.25 mm. If the thickness of the adhesive layer 20 is less than 0.05 mm, the bonding strength between the barrier layer 10 and the glass cloth 30 is significantly lowered resulting in a problem of reduced durability, and if the thickness is greater than 0.25 mm, it becomes difficult to wind in the manufacturing and construction process of the secondary barrier 1 resulting in a problem in that workability is reduced.

### Example 2. Secondary barrier including polymer barrier layer

The secondary barrier 1 according to the present example may include a barrier layer 10, and may be formed by laminating an adhesive layer 20 and a glass cloth 30 on both sides of the barrier layer 10.

The barrier layer 10 may be a polymer barrier layer 10 including a polymer, and may serve to prevent leakage of liquefied gas through the liquid-tight and airtightness of the secondary barrier 1. For example, the barrier layer 10 may include one or more polymers having a density of 0.9 to 1.7 g/cm³. The conventional metal barrier layer is made of metal, such as aluminum, and exhibits a density of about 2.7 g/cm³ or more and accordingly, when applied to a liquefied gas storage tank, the weight reached several tons. In the present example, a polymer having excellent corrosion resistance is used as the barrier layer 10, and it is possible to secure superior tear strength compared to metal and improve workability due to light weight.

Specifically, the barrier layer 10 according to the present example includes one or more polymers selected from the group consisting of polyethylene (PE), polyethylene terephthalate (PET), polyvinyl alcohol (PVA), ethylene vinyl alcohol (EVOH), and nylon, thereby improving tear strength compared to a conventional metal material such as aluminum and at the same time exhibiting excellent resistance to corrosion. The main characteristics of the conventional metal material and the polymer material for use in the barrier layer 10 according to the present example are shown in Table 3 below. Gas barrier properties and corrosion resistance were expressed as Excellent: 5, Good: 4, Normal: 3, Weak: 2, Corrosion or Weakness: 1.

**TABLE 3**

| Classific ation | Type | Density (g/cm³) | Gas Barrier | Corrosion resistance | Coefficient of thermal expansion (X10⁻⁶/K) | Modulus of elasticity (GPa) | Tensile strength (MPa) |
|---|---|---|---|---|---|---|---|
| Metal material | Aluminum | 2.7 | 5 | 1 | 23.1 | 69 | 700 |
| | Beryllium copper | 8.25 | 5 | 1 | 17 | 125 ∼ 130 | 965 ∼ 1205 |
| | Copper | 8.94 | 5 | 1 | 17 ~ 18 | 121 ∼ 133 | 210 |
| | SUS304 | 8 | 5 | 1 | 17.3 | 193 ∼ 200 | 215 ∼ 505 |
| Polymer Material | Ultra high molecular weight polyethyle ne | 0.93 | 2 | 5 | 150 | 0.83 | 40 |
| | Polyethyle ne terephthal ate | 1.35 | 3 | 5 | 60 | 2 ∼ 2.7 | 54.5 |
| | Polyvinyl alcohol | 1.2 | 4 | 3 | 275 | 4.74 | 480 |
| | Ethylene vinyl alcohol | 1.2 | 4 | 3 | 40 ∼ 150 | 1.1 ∼ 3.1 | 75 |
| | Nylon | 1.65 | 5 | 5 | 17 | 18.5 | 300 |

The polyethylene may be a high molecular weight polyethylene having a molecular weight of 1 million to 7 million, and may be an ultra high molecular weight polyethylene (UHMWPE) having a molecular weight of 3.5 to 7.5 million. UHMWPE has a density of approximately 0.9 to 1.0 g/cm³, is suitable for use at cryogenic temperatures, and has excellent corrosion resistance including water resistance, chemical resistance and abrasion resistance. Polyethylene terephthalate has a density of approximately 1.1 to 1.5 g/cm³, is suitable for use at cryogenic temperatures, and has excellent water resistance. Polyvinyl alcohol has a density of approximately 1.0 to 1.3 g/cm³, is suitable for use at cryogenic temperatures, and has excellent gas barrier properties. Ethylene vinyl alcohol has a density of approximately 1.0 to 1.3 g/cm³, is suitable for use at cryogenic temperatures, and has excellent gas barrier properties. Nylon has a density of approximately 1.1 to 1.7 g/cm³, is suitable for use at cryogenic temperatures, and has excellent gas barrier properties and water resistance. The nylon may be, for example, nylon-6, nylon-66, nylon-MXD6, or the like.

Additionally, the barrier layer 10 according to the present example may be formed by depositing at least one metal selected from aluminum and copper or an oxide thereof on at least a portion of the barrier layer 10. As the metal oxide, a ceramic including aluminum oxide may be used. Accordingly, the barrier layer 10 may be a polymer layer including the above-described polymer, and a metal deposited on at least a portion of the surface of the barrier layer 10 may be used. Deposition of the metal may be any of chemical vapor deposition and physical vapor deposition. It may be desirable to deposit a metal on both sides of the barrier layer 10.

Among polymers that may be used as the barrier layer 10, polyethylene and polyethylene terephthalate may have relatively low gas barrier properties compared to polyvinyl alcohol, ethylene vinyl alcohol, and nylon. By depositing a metal or an oxide thereof on the surface of such polyethylene and polyethylene terephthalate, the gas barrier properties of the barrier layer 10 may be increased to improve the liquid-tight and airtight performance of the secondary barrier 1. However, the present example is not limited thereto, and the gas barrier properties may be further increased through deposition of a metal or an oxide thereof on the surfaces of polyvinyl alcohol, ethylene vinyl alcohol, and nylon having relatively excellent gas barrier properties. In addition, deposition of a metal or an oxide thereof on the barrier layer 10 not only improves the gas barrier properties of the barrier layer 10, but also increases the surface energy of the barrier layer 10 relatively, making it possible to provide an effect of improving adhesion to the adhesive layer 20, which will be described later.

The adhesive layer 20 may be formed on both sides of the barrier layer 10 to bond the glass cloth 30 to be described later to the barrier layer 10 by adhesion. The adhesive layer 20 may be disposed in such a way that an adhesive composition is applied on both sides of the barrier layer 10 or a separate layer such as an adhesive film or sheet is laminated.

When the barrier layer 10 includes a polyethylene-based polymer such as polyethylene or polyethylene terephthalate, since it has a relatively low surface energy compared to a conventional barrier layer made of a metal material, adhesion with the glass cloth 30 through the adhesive layer 20 is difficult. Therefore, in the present example, when the barrier layer 10 includes at least one of polyethylene and polyethylene terephthalate, it is possible to solve the problem of difficult adhesion of the barrier layer 10 by using a polyethylene-based compound, which is a polymer of the same type, as the adhesive layer 20.

Specifically, the adhesive layer 20 may be formed of an adhesive composition including a polyurethane-based compound or a polyethylene-based compound, an adhesive film, or an adhesive sheet. A thermoplastic adhesive layer may be used.

Preferably, the polyethylene-based compound is one in which one or more functional groups are bonded to a polyethylene main chain as a side chain, and the compound may be at least partially modified by bonding a polar functional group. That at least a part of the compound is modified may mean that a functional group is crosslinked with respect to the compound in a manner such as graft polymerization to form a branch.

The secondary barrier 1 according to the present example may include the adhesive layer 20 of Example 1 described above, and the detailed description is replaced with the previous example.

When the barrier layer 10 includes at least one of polyvinyl alcohol, ethylene vinyl alcohol, and nylon, the adhesive layer 20 may be formed using a thermoplastic polyurethane-based adhesive to adhere to the glass cloth 30. In addition, even when the barrier layer 10 includes polyethylene or polyethylene terephthalate, as described above, if at least a portion of the surface of the barrier layer 10 is deposited with a metal such as aluminum or copper or an oxide thereof, a polyurethane-based adhesive may be used.

The glass cloth 30 is disposed and laminated on the adhesive layer 20 formed on both sides of the barrier layer 10, and the glass cloth 30 may include one or more fibers selected from the group consisting of glass fibers, polyethylene fibers, polyparaphenylenebenzobisoxazole fibers (PBO), aramid fibers, and carbon fibers.

For example, the glass fibers may be E or S-glass, and the polyethylene fibers may be UHMWPE fibers. The glass cloth 30 may be a mixed fiber including one or more fibers described above.

Preferably, the glass cloth 30 may be a fabric layer including polyethylene fibers as polymer fibers. Most preferably, the polyethylene fibers may be UHMWPE fibers. UHMWPE fibers have a molecular weight of 3.5 million to 7.5 million, and have been used in fields requiring excellent cut resistance due to high tear strength. Paying attention to the fact that these UHMWPE fibers have excellent ultimate tensile strength, tear strength, and light weight, weaving a fabric layer with the fibers and using it as the glass cloth 30 for the secondary barrier 1, it is possible to secure the effect of increasing the durability of the secondary barrier 1.

When the glass cloth 30 includes polyethylene fibers, the adhesive layer 20 is preferably a polyethylene-based adhesive as described above, and when at least one of glass fiber, polyparaphenylenebenzobisoxazole fiber, aramid fiber, and carbon fiber is included, a polyurethane-based adhesive as in the prior art may be used.

The liquefied gas storage tank according to an example of the present disclosure may be one in which the secondary insulating wall, the secondary barrier, the primary insulating wall and the primary barrier fixed to the hull are arranged sequentially, and the secondary barrier may be according to the above-described example.

The insulating wall constitutes the wall surface of the liquefied gas storage tank, and provides insulation for the liquefied gas stored in the liquefied gas storage tank, including an insulating material. The secondary insulating wall may be constructed so that at least one surface is fixed to the hull of the liquefied gas carrier, and the secondary barrier 1 may be disposed on the insulating wall. A secondary barrier 1 including RSB and FSB may be disposed on the insulating wall in a form in which it is adhered.

Specifically, the RSB may be disposed on the insulating wall through an adhesive layer, and the FSB may be disposed on the RSB through the adhesive layer.

RSB may be provided to cover the upper surface of the insulating wall to provide liquid tightness. The FSB may be provided to cover the gaps between the plurality of RSBs that are respectively provided on the plurality of insulating walls to provide airtightness.

RSB and FSB of the secondary barrier 1 may be determined according to the shape and size of the applied liquefied gas storage tank and the shape and size of the insulating wall, and may be a wide plate or a narrow and long band, but is not limited thereto, and the shapes and sizes of the RSB and the FSB are not necessarily the same.

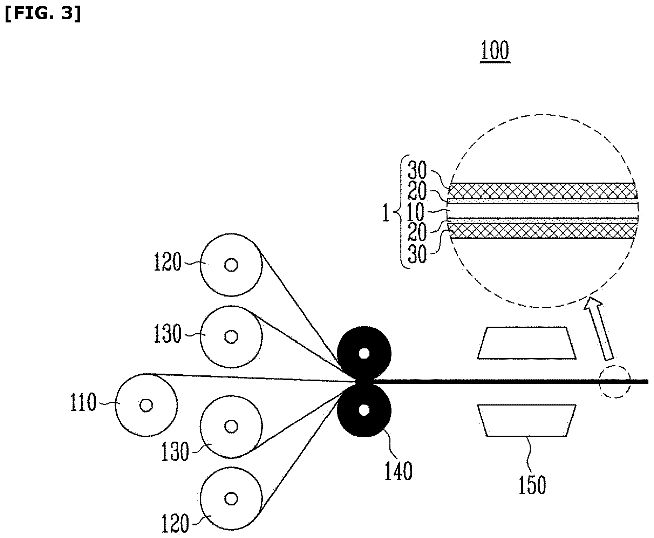

FIG. 3 is a conceptual diagram showing a manufacturing apparatus 100 of the secondary barrier 1 according to an embodiment of the present disclosure.

The manufacturing apparatus 100 of the secondary barrier 1 may include a barrier layer roll 110, a fiber roll 120, an adhesive film roll 130, a roll press 140, a heating furnace 150, and the like. The secondary barrier 1 may be continuously manufactured using the apparatus 100.

The barrier layer 10 may be supplied in a wound form on the barrier layer roll 110, and the glass cloth 30 including polyethylene fibers may be supplied in a form wound around each glass cloth roll 120. Each roll may be disposed so that the glass cloth 30 is laminated on both sides of the barrier layer 10, and the adhesive layer 20 may be supplied by being wound on the roll 130 in the form of a film before the glass cloth 30 is disposed. The adhesive film roll 130 may be supplied such that the adhesive film is disposed between the barrier layer 10 and the glass cloth 30.

Although not shown, the glass cloth 30 may be provided to be laminated together with the barrier layer 10 and the adhesive layer 20 after being corona-treated by passing between the electrodes where a highfrequency, high-voltage output is applied and corona discharge occurs, or being plasma treated on the surface of the glass cloth 30 using various reactive gases. By increasing the low surface energy of polyethylene through the surface treatment of the glass cloth 30 and adhering it to the adhesive layer 20, the adhesion to the barrier layer 10 may be further increased.

After the adhesive layer 20 is formed on both sides of the barrier layer 10, the glass cloth 30 is disposed and pressed by the roll press 140 at the same time, and the secondary barrier 1 may be manufactured through a heating furnace 150.

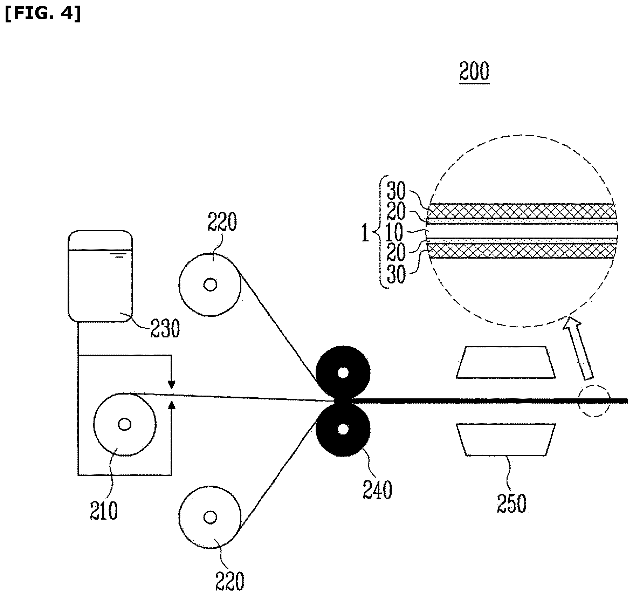

FIG. 4 is a conceptual diagram showing the secondary barrier 1 manufacturing apparatus 200 according to another embodiment of the present disclosure.

The manufacturing apparatus 200 of the secondary barrier 1 may include a barrier layer roll 210, a fiber roll 220, an adhesive injection tank 230, a roll press 240, a heating furnace 250, and the like. As in the above-described embodiment, the secondary barrier 1 may be continuously manufactured using the apparatus 200.

Hereinafter, different points from the previous example will be mainly described, and the common content will be replaced with the content of the previous example.

The adhesive injection tank 230 may be to form the adhesive layer 20 by storing an adhesive suitable for the polyethylene fiber fabric having a non-adhesive property, and then supplying it appropriately to the release rate of the barrier layer 10 according to the rotation of the barrier layer roll 210.

After the adhesive layer 20 is formed on both sides of the barrier layer 10, the glass cloth 30 is disposed and pressed by a roll press 240 at the same time, and the secondary barrier 2 may be manufactured through a heating furnace 250.

As such, the present example provides the apparatuses 100 and 200 for the continuous manufacture of the secondary barrier 1 including the adhesive layer 20 and a manufacturing method using the same.

### Experimental Example 1. Preparation and identification of physical properties of the secondary barrier according to Example 1

Hereinafter, the secondary barrier was manufactured through the same process as in FIG. 3, and tensile strength was confirmed at room temperature and low temperature conditions. An aluminum foil having a thickness of 70 µm was used as the barrier layer, and LLDPE films were laminated on both sides thereof, and then a glass cloth made of UHMWPE fibers was laminated. The laminate was injected into a heating furnace and heated to 130°C to prepare a secondary barrier. At this time, UHMWPE fibers were prepared to about 200, 400, and 800 denier in thickness, respectively, and named as Examples 1-1 to 1-3.

As a comparative example, a conventional secondary barrier in which a glass cloth including glass fibers is laminated was used, and the barrier layer was the same as in example, but the adhesive layer was laminated with a thermoplastic polyurethane adhesive film and then heated to 180°C or higher to prepare a secondary barrier.

The ultimate tensile strengths of the secondary barriers according to the prepared examples and comparative examples were measured under room temperature and cryogenic (-170°C) conditions, and are shown in Table 4 below.

**TABLE 4**

| Classification | Ultimate tensile strength (MPa) | |
|---|---|---|
| | Room temperature | -170°C |
| Example 1-1 (UHMWPE 200D) | 292 | 275 |
| Example 1-2 (UHMWPE 400D) | 315 | 394 |
| Examples 1-3 (UHMWPE 800D) | 392 | 439 |
| Comparative Example (glass fiber) | 219 | 299 |

As shown in Table 4, the secondary barrier according to Example 1-1 exhibited similar ultimate tensile strength to the secondary barrier of Comparative Example, and the secondary barriers according to Examples 1-2 and 1-3 exhibited superior ultimate tensile strength compared to Comparative Examples under all temperature conditions. In particular, the secondary barrier 1 according to Example 1-3 showed 79% higher ultimate tensile strength at room temperature compared to the conventional secondary barrier, and was confirmed to be approximately 47% higher in cryogenic conditions.

Examples 1-2 and 1-3 both exhibited superior ultimate tensile strength compared to Comparative Examples, but the secondary barrier according to Example 1-2, which has a relatively thin degree of thickness and exhibits better workability was selected and the durability life was evaluated through a tensile fatigue test, and this was compared with the secondary barrier according to Comparative Example.

The stress according to Table 5 below was repeatedly applied to each secondary barrier sample at room temperature and low temperature (-110°C) conditions, and the number of times the stress was applied (endurance life) until the moment of fatigue failure in the sample is shown.

**TABLE 5**

| Classification | Room temperature | | -110°C | |
|---|---|---|---|---|
| | Stress (MPa) | Endurance life (Times) | Stress (MPa) | Endurance life (Times) |
| Example 1-2 (UHMWPE 400D) | 147 | 17,462 | 210 | 1,023 |
| | 129 | 524,697 | 183 | 302,629 |
| | | | 157 | ≥ 1,000,000 |
| Comparative Example (glass fiber) | 121 | 31 | 119 | 558 |
| | 65.7 | 385 | 71.4 | 1,959 |
| | | | 47.6 | 41,625 |

As shown in Table 5, It was confirmed that the secondary barrier according to Example 1-2 exhibited an exceptionally high durability despite applying a relatively greater stress compared to the secondary barrier according to Comparative Example at room temperature and low temperature (-110°C) conditions.

As described above, Example 1 of the present disclosure provides a secondary barrier 1 having a structure in which a glass cloth 30 including polyethylene fibers and an adhesive layer 20 for fixing the same are laminated on the barrier layer 10. In addition, the secondary barrier 1 according to the present example can secure excellent ultimate tensile strength and durable life even in a cryogenic environment, and may be used in place of the conventionally well-known Mark-III type triplex.

### Experimental Example 2. Preparation and identification of physical properties of the secondary barrier according to Example 2

In the following, by manufacturing a secondary barrier through the same process as in FIG. 3, ultimate tensile strength (UTS), elongation (elongation in UTS), modulus of elasticity and shear strength were confirmed at room temperature (23°C) and cryogenic (-170°C) conditions, which are shown in Table 2 below. An ethylene vinyl alcohol film having a thickness of 100 µm was used as the barrier layer, and LLDPE films were laminated on both sides thereof, and then a glass cloth made of UHMWPE fibers was laminated. The laminate was injected into a heating furnace and heated to 130°C to prepare a secondary barrier.

As a Comparative Example, a secondary barrier including a conventional aluminum metal barrier layer and a glass cloth of glass was used. For the Comparative Example, the warp portion and the woof portion of the glass cloth of glass woven from the secondary barrier were measured and shown, respectively.

**TABLE 6**

| | Example 2 | | Comparative Example | | | |
|---|---|---|---|---|---|---|
| | 23°C | -170°C | 23°C | | -170°C | |
| | | | Warp | Woof | Warp | Woof |
| Ultimate tensile strength (MPa) | 374 | 388 | 252 | 219 | 309 | 299 |
| Elongation (%) | 8.7 | 6.8 | 4.47 | 4.94 | 4.35 | 4.71 |
| Modulus of elasticity (GPa) | 4.3 | 5.7 | 23.5 | 20.6 | 23.3 | 20.2 |
| Shear strength (MPa) | 4.5 | 7 | 13.0 | 12.7 | 16.6 | 19.7 |

The secondary barrier to be applied to the liquefied gas storage tank is required to have a UTS of about 172 MPa at 23°C and about 235 MPa at -163°C. The secondary barrier according to Example 2 has a UTS that is about 217% better at 23°C and about 165% better at -170°C compared to the reference value, and it was found to be superior to the Comparative Example, which only had a UTS that was about 127% to 150% better than the reference value.

In addition, it is preferable that the secondary barrier to be applied to the liquefied gas storage tank has an elongation of 2% or more under the conditions to which the above temperature and UTS are applied. The secondary barrier according to the example exhibited an elongation of approximately 7 to 9%, and was confirmed to be superior to that of Comparative Example showing an elongation of approximately 4 to 5%.

In addition, the secondary barrier to be applied to the liquefied gas storage tank preferably has a modulus of elasticity of about 20 GPa or less. The secondary barrier according to Example 2 had a lower modulus of elasticity compared to the secondary barrier according to Comparative Example, and in particular, it was confirmed that it was excellent in tear resistance by maintaining a modulus of elasticity of less than 20 GPa even under cryogenic conditions.

The shear strength (MPa) of the secondary barrier according to Example 2 was found to be lower than that of Comparative Example. This is a result that appears because the secondary barrier according to the Comparative Example uses a glass fiber and a metal barrier film that are easy to adhere to, and considering that the shear strength condition for applying to the liquefied gas storage tank should be greater than about 3.5 MPa, it can be seen that the secondary barrier according to the present example is at a level suitable for practical application.

In Example 2 of the present disclosure as described above, by using a polymer having a relatively low specific gravity for the barrier layer 10 in which a conventional metal material has been used, superior tear resistance and corrosion resistance can be secured compared to the metal barrier layer. In addition, a relatively thin metal may be deposited on a portion of the barrier layer 10 including a polymer to improve the gas barrier properties of the barrier layer 10. Through this, weight reduction of the secondary barrier including the barrier layer 10 can be achieved, and the installation workability of the secondary barrier and operational efficiency of the vessel can be improved.

Although the present disclosure has been described in detail through specific embodiments, it is intended to describe the present disclosure in detail, and the present disclosure is not limited thereto, and it will be apparent that modifications or improvements are possible by those skilled in the art within the technical spirit of the present disclosure.

The present disclosure is not limited to the above-described embodiments, and a combination of the embodiments or a combination of at least one of the embodiments and a known technology may be included as another embodiment.

All simple modifications and variations of the present disclosure fall within the scope of the present disclosure, and the specific scope of protection of the present disclosure will be made clear by the appended claims.

**<Explanation of Symbols>**

| | |
|---|---|
| 1: Secondary barrier | 10: Barrier layer |
| 11: Adhesive layer | 12: Glass cloth |
| 20: Adhesive layer | 30: Glass cloth |
| 100, 200: Secondary barrier manufacturing apparatus | |
| 110, 210: Barrier layer roll | |
| 120, 220: Glass cloth roll | |
| 130: Adhesive film roll | 230: Adhesive injection tank |
| 140, 240: Roll press | |
| 150, 250: Heating furnace | |

## Claims

1. A secondary barrier for a liquefied gas storage tank, the secondary barrier comprising:
a barrier layer comprising (a) a metal or (b) one or more polymers selected from a group consisting of polyethylene, polyethylene terephthalate, polyvinyl alcohol, ethylene vinyl alcohol and nylon; and
a glass cloth laminated on both sides of the barrier layer,
wherein the glass cloth is fixed by an adhesive layer.

2. The secondary barrier of claim 1, wherein the barrier layer comprises a metal, and
the glass cloth comprises polyethylene fibers.

3. The secondary barrier of claim 2, wherein a thickness of the barrier layer is 50 to 200 µm.

4. The secondary barrier of claim 2, wherein the polyethylene fibers are 200 to 1600 denier.

5. The secondary barrier of claim 1, wherein the barrier layer comprises one or more polymers selected from a group consisting of polyethylene, polyethylene terephthalate, polyvinyl alcohol, ethylene vinyl alcohol and nylon.

6. The secondary barrier of claim 5, wherein the polymer has a density of 0.9 to 1.7 g/cm³.

7. The secondary barrier of claim 5, wherein the barrier layer is at least partly deposited with one or more metals or metal oxides selected from aluminum, copper, and oxides thereof.

8. The secondary barrier of claim 5, wherein the glass cloth comprises one or more fibers selected from a group consisting of glass fibers, polyethylene fibers, polyparaphenylenebenzobisoxazole fibers, aramid fibers and carbon fibers.

9. The secondary barrier of claim 1, wherein the adhesive layer comprises at least one of linear low-density polyethylene and ethylene vinyl acetate.

10. The secondary barrier of claim 9, wherein the adhesive layer has a melting point lower than a melting point of the glass cloth, and
the melting point of the adhesive layer is 90 to 120°C.
